# EUROPÄISCHE PATENTSCHRIFT

(11) **EP 4 194 296 B1**
(45) Veröffentlichungstag und Bekanntmachung des Hinweises auf die Patenterteilung: **21.08.2024**
(21) Anmeldenummer: 22209917.8
(22) Anmeldetag: 28.11.2022
(51) Int. Cl.: B60W 20/16, B60W 50/00, B60W 20/12, B60W 20/30, G01C 21/34

(54) **VERFAHREN ZUM PRÄDIKTIVEN BETREIBEN EINES KRAFTFAHRZEUGS**
METHOD FOR PREDICTIVE OPERATION OF A MOTOR VEHICLE
PROCÉDÉ DE FONCTIONNEMENT PRÉDICTIF D'UN VÉHICULE AUTOMOBILE

(30) Priorität: 09.12.2021 DE 102021214090
(43) Veröffentlichungstag der Anmeldung: 14.06.2023
(73) Patentinhaber: Vitesco Technologies GmbH, 93055 Regensburg (DE)
(72) Erfinder: Grubwinkler, Stefan, 81737 München (DE); Rohrer, Stefan, 81737 München (DE); Perugini, Mattia, 81737 München (DE); Bauer, Hans, 81737 München (DE)
(74) Vertreter: Vitesco Technologies

(56) Entgegenhaltungen:
- WO-A1-2011/066468
- WO-A1-2021/175423
- DE-A1- 102015 116 600

## Beschreibung

Die vorliegende Erfindung bezieht sich auf ein Verfahren zum prädiktiven Betreiben eines Kraftfahrzeugs auf der Grundlage einer prädiktiven Fahrfunktion, einer für die Fahrfunktion charakteristischen Kostenfunktion und einer digitalen Karte, die Kartenattribute enthält.

Prädiktive Funktionen verwenden als Eingangsgrößen häufig Kartenattribute, wie beispielsweise Verkehrsschilder, Ampeln, Geschwindigkeitsbegrenzungen, Steigungen, Kurvenradien, Haltepunkte oder die Verkehrsgeschwindigkeit. Für die Prädiktion werden in der Regel Attribute der beabsichtigten Route verwendet. Die Wahl der Route kann durch folgende Verfahren erfolgen:
- Zieleingabe in ein Navigationsgerät;
- Berechnen der wahrscheinlichsten Route (*Most probable path*) auf Basis des allgemeinen Verkehrsflusses;
- individuell wahrscheinlichste Route auf Basis des individuellen Mobilitätsverhaltens.

Für die Wahl der Route ist die aktuelle Position des Fahrzeugs (z.B. ermittelt anhand eines Satellitennavigationssystems, GPS-Position) notwendig. Auf Basis der Prädiktion reduzieren prädiktive Fahrfunktionen den Verbrauch und bzw. die Emissionen des Fahrzeugs. Prädiktive Funktionen sind beispielsweise Betriebsstrategien für ICE-, HEV-, PHEV-, EV-Fahrzeuge, Thermomanagementfunktionen, prädiktive Funktionen zu Ansteuerung von Komponenten des Antriebsstrangs (z.B. eine Beladung von SCR-Systemen, eine Erwärmung von Katalysatoren), prädiktive Gangschaltstrategien, und prädiktive Strategien zum Thermomanagement von elektrischen Antrieben. Die Stellgrößen der Komponenten oder des Gesamtsystems werden so angesteuert, dass der Energieverbrauch und/oder die Emissionen gesenkt werden. Die Senkung wird im Vergleich zu konventionellen Strategien betrachtet, welche ohne Vorausschauinformationen auskommen. Durch die konventionelle Strategie ist der sichere Betrieb des Fahrzeugs gewährleistet. Die konventionelle Strategie kann somit auch als Rückfallebene der prädiktiven Strategie betrachtet werden.

Falls keine prädiktive Informationen zur Verfügung stehen, sind die Fahrfunktionen so parametriert/geregelt, dass unter allen aufzutretenden Situationen die Emissionsrichtlinien oder die Grenzwerte zum Schutz der Bauteile eingehalten werden. Es wird beispielsweise davon ausgegangen, dass jederzeit eine Steigung für eine längere Strecke vorkommen kann. Emissionsrelevante Funktionen sind daher so parametriert, dass ohne Prädiktion unter allen Bedingungen die Emissionsrichtlinien eingehalten werden können, was zu einem deutlich erhöhten Kraftstoffverbrauch führt.

Ferner ist die Wahl der zukünftigen Route mit einer Unsicherheit verbunden. Der wahrscheinlichste Pfad ist per se mit einer Fehlerwahrscheinlichkeit behaftet. Auch bei Verwendung einer Navigationseinheit kann der Fahrer von der berechneten Route abweichen. Die prädiktive Strategie regelt die Komponenten des Antriebsstrangs jedoch abhängig von der berechneten Route. Bei Routenabweichungen ist es dadurch möglich, dass die prädiktive Betriebsstrategie mit einem höheren Verbrauch und höheren Emissionen verbunden ist als die konventionelle Strategie.

Nach der aktuellen Gesetzgebung sind für die Einhaltung von Emissionsgrenzwerten und die Angabe von Verbrauchswerten nur Verfahren und Strategien zulässig, welche in allen Situationen funktionieren. Prädiktive Strategien, welche von der zukünftigen Route abhängig sind, können daher bei der Homologation nicht berücksichtigt werden, da die die richtige Wahl der Route nicht gewährleistet werden kann. Daher werden können nur schlüsselfertige Lösungen (*turn-key-solutions*) berücksichtigt werden, welche ohne Interaktion des Fahrers nach Drehen des Zündschlüssels aktiv sind. Für die Gesetzgebung können daher derartige prädiktive Strategie nicht verwendet werden, obwohl sie einen wichtigen Beitrag zur Einhaltung der Emissionsgrenzwerte und zur Senkung des Energieverbrauchs liefern würden.

Bekannt ist die WO 2021/175423 A1, die eine modellbasierte prädiktive Regelung eines Fahrzeugs unter Berücksichtigung eines Ankunftszeit-Faktors beschreibt.

Aufgabe der Erfindung ist es, ein Verfahren zum prädiktiven Betreiben eines Kraftfahrzeugs vorzusehen, dass Karten und Routeninformationen für prädiktive Betriebsstrategien so verwenden kann, dass die Nutzung beispielsweise gemäß der Gesetzgebung zur Einhaltung der Emissionsrichtlinien erlaubt ist.

Diese Aufgabe wird gelöst durch ein Verfahren zum prädiktiven Betreiben eines Kraftfahrzeugs gemäß Anspruch 1. Die vorliegende Erfindung ist durch die Gegenstände der abhängigen Ansprüche weitergebildet.

Es ist ein Verfahren zum prädiktiven Betreiben eines Kraftfahrzeugs auf der Grundlage einer prädiktiven Fahrfunktion, einer für die Fahrfunktion charakteristischen Kostenfunktion und einer digitalen Karte, die Kartenattribute enthält, vorgesehen. Das Verfahren hat Schritte zum Extrahieren von Kartenattributen innerhalb eines Prädiktionshorizontes um eine momentane (geographische) Position des Kraftfahrzeugs; Bestimmen der für die prädiktive Fahrfunktion charakteristischen Kostenfunktion; Bestimmen von möglichen Routen innerhalb des Prädiktionshorizontes durch einen Navigationsalgorithmus; Bestimmen eines Maximums oder eines Minimums der Kostenfunktion von den möglichen Routen, um eine ungünstigste Kostenfunktion zu erhalten; und Berechnen der prädiktiven Fahrfunktion basierend auf der ungünstigsten Kostenfunktion oder basierend auf den Kartenattributen der ungünstigsten Kostenfunktion. Vorzugsweise werden die Schritte iterativ durchgeführt, zum Beispiel in einem Intervall zwischen 1 s und 5 s.

Bei einem Ausführungsbeispiel ist der Prädiktionshorizont ein Umkreis mit einem Radius zwischen 2 und 10 km, vorzugsweise zwischen 5 und 8 km, um die momentane Position des Kraftfahrzeugs. Für zahlreiche prädiktive Antriebsfunktionen mit kurzem bis mittleren Vorausschauhorizont (z.B. < 8 km) ist es nämlich ausreichend, dass bekannt ist, dass bestimmte Situationen nicht auftreten bzw. ausgeschlossen werden können. Es ist ausreichend, dass ausgeschlossen werden kann, dass für einen bestimmten Prädiktionshorizont (z.B. 5 km) eine bestimmte Situation für jede mögliche Route nicht auftreten kann. Für eine solche Worst-Case-Abschätzung muss die tatsächliche Route nicht bekannt sein.

Das Potential zur Verbrauchs- oder Emissionssenkung bei der vorliegenden Worst-Case-Abschätzung ist geringer, als im Vergleich zu einer exakten Routenprädiktion, jedoch sind je nach Funktion signifikante Einsparpotentiale möglich.

Für eine homologierbare Funktion kann es sich um eine schlüsselfertige Lösung (Turn-Key-solution) handeln. D.h. Kartenmaterial kann im Fahrzeug vorliegen und die aktuelle Position des Fahrzeugs kann über eine fest installierte GPS-Antenne bestimmt werden. Die Worst-Case-Abschätzung lässt sich somit in einem Homologationsverfahren verwenden.

Bei einem Ausführungsbeispiel hat das Verfahren darüber hinaus einen Schritt zum Filtern der Kartenattribute oder von Werten der Kostenfunktion gemäß zulässigen Maximalwerten und/oder zulässigen Minimalwerten, und/oder einen Schritt zum Begrenzen der Kartenattribute oder der Werte der Kostenfunktion auf einen zulässigen Maximalwert und/oder einen zulässigen Minimalwert.

Bei einem Ausführungsbeispiel gibt die prädiktive Fahrfunktion einen Parameter an, der Abgasemissionen oder einen Kraftstoffverbrauch des Kraftfahrzeugs beeinflusst. Bei einem Ausführungsbeispiel gibt die prädiktive Funktion einen Parameter zum Ansteuern einer Komponente eines Antriebsstrangs des Fahrzeugs an, insbesondere eine Beladung eines Katalysators für eine selektive katalytische Reduktion, eine Erwärmung eines Katalysators, ein Parameter für eine prädiktive Gangschaltstrategie, oder ein Parameter für eine prädiktive Strategie zum Thermomanagement von elektrischen Antrieben.

Bei einem Ausführungsbeispiel gibt die charakteristische Kostenfunktion zumindest eine zu erwartende Last eines Motors des Kraftfahrzeugs, eine zu erwartende Beschleunigungsarbeit des Kraftfahrzeugs, eine zu erwartende Stillstandszeit des Kraftfahrzeugs, eine maximale zu erwartende Durchschnittsgeschwindigkeit des Kraftfahrzeugs, eine Anzahl von zu erwartenden Stopps des Kraftfahrzeugs, oder eine Anzahl von zu erwartenden Abbremsungen des Kraftfahrzeugs in Abhängigkeit von den Kartenattributen an. Die Worst-Case-Abschätzung wird damit anhand der für die prädiktiven Fahrfunktion charakteristischen Kostenfunktion bestimmt. Die Kostenfunktion kann beispielsweise die notwendige Beschleunigungsarbeit des Fahrzeugs sein, so dass die notwendigen Beschleunigungsvorgänge aus Verkehrszeichen, Geschwindigkeitsbegrenzungen und Kurven unter Berücksichtigung der Steigungen ermittelt wird.

In vorteilhafter Weise kann die Worst-Case-Route abhängig von der Kostenfunktion und der Filterung anhand der Kriterien zur Emissionsgesetzgebung berechnet werden. Die Kostenfunktion kann für verschiedene prädiktive Fahrzeugfunktionen verwendet werden.

Weitere Vorteile und Merkmale der vorliegenden Erfindung ergeben sich aus der folgenden beispielhaften Beschreibung einer bevorzugten Ausführungsform.

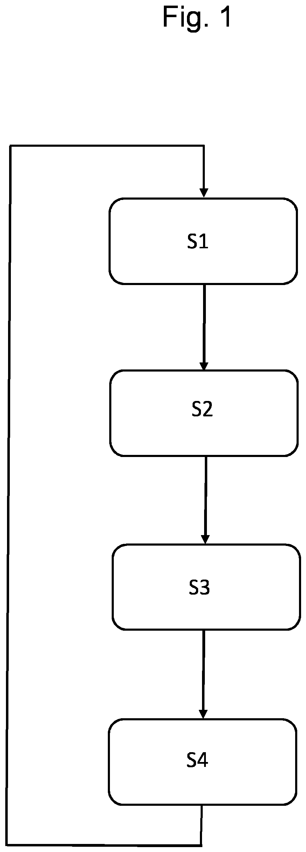

Fig. 1 zeigt ein Verfahren zum prädiktiven Betreiben eines Kraftfahrzeugs gemäß einem Ausführungsbeispiel. Das Verfahren zum prädiktiven Betreiben des Kraftfahrzeugs wird auf der Grundlage einer prädiktiven Fahrfunktion, einer für die Fahrfunktion charakteristischen Kostenfunktion und einer digitalen Karte durchgeführt. Das vorliegende Ausführungsbeispiel betrifft eine prädiktive SCR-Strategie für ein SCR-System, das einen Katalysator für eine selektive katalytische Reduktion (SCR) aufweist. Für die intelligente prädiktive SCR-Strategie soll eine Prädiktion des erwarteten Temperaturanstiegs am Eingang des SCR-Systems in den nächsten 5 km als die prädiktive Fahrfunktion berücksichtigt werden.

Bei einem Schritt S1 werden Kartenattribute innerhalb des Prädiktionshorizontes von 5 km um eine momentane Position des Kraftfahrzeugs extrahiert. Der Prädiktionshorizont kann selbstverständlich auch ein Umkreis mit einem Radius zwischen 2 und 10 km, vorzugsweise zwischen 5 und 8 km, um die momentane Position des Kraftfahrzeugs sein.

Bei einem Schritt S2 wird eine für die prädiktive Fahrfunktion charakteristische Kostenfunktion bestimmt. Die charakteristische Kostenfunktion kann zumindest eine zu erwartende Last eines Motors des Kraftfahrzeugs, eine zu erwartende Beschleunigungsarbeit des Kraftfahrzeugs, eine zu erwartende Stillstandszeit des Kraftfahrzeugs, eine maximale zu erwartende Durchschnittsgeschwindigkeit des Kraftfahrzeugs, eine Anzahl von zu erwartenden Stopps des Kraftfahrzeugs, oder eine Anzahl von zu erwartenden Abbremsungen des Kraftfahrzeugs in Abhängigkeit von den Kartenattributen angeben. Im vorliegenden Ausführungsbeispiel ist der Temperaturanstieg von der erwarteten Last des Motors abhängig, so dass die erwartete Last des Motors als die Kostenfunktion in Abhängigkeit der Steigungen, der erwarteten Geschwindigkeit und der erwarteten Beschleunigungsvorgänge der einzelnen Streckenabschnitte aufgestellt werden kann.

Bei einem Schritt S3 werden mögliche Routen innerhalb des Prädiktionshorizontes durch einen Navigationsalgorithmus, beispielsweise Dijkstra, A*, Johnson, bestimmt.

Bei einem Schritt S4 wird ein Maximum oder ein Minimum der Kostenfunktion von den möglichen Routen bestimmt, um eine ungünstigste Kostenfunktion (den so genannten *worst case*) zu erhalten, d.h. für die aktuelle Position wird nun ausgehend von der aktuellen Position, die Route mit der ungünstigsten Kostenfunktion berechnet. Diese Route entspricht dem Routenverlauf, bei dem der Temperaturverlauf als prädiktive Fahrfunktion am stärksten ansteigen würde.

Bei einem Schritt S5 wird die prädiktive Fahrfunktion basierend auf der ungünstigsten Kostenfunktion oder basierend auf den Kartenattributen der ungünstigsten Kostenfunktion berechnet.

Befindet sich beispielsweise das Fahrzeug in einem Stadtgebiet ohne größere Steigungen, würde evtl. in den nächsten 5 km kein enormer Anstieg der Abgastemperatur zu erwarten sein, da keine Autobahnabschnitte mit hohem Geschwindigkeitslimit oder Steigungen zu erwarten sind. In dieser Situation könnte die Beladung des SCR-Systems erhöht werden und somit die Emissionen gesenkt werden. Ohne Worst-Case Abschätzung mit der ungünstigsten Kostenfunktion würde die Beladung des SCR-Systems nicht erhöht werden können, da das Fahrzeug jederzeit auf einen Autobahnabschnitt mit langer Bergauffahrt fahren könnte, was höhere Emissionen zur Folge hätte.

Die Schritte werden iterativ durchgeführt, vorzugsweise in einem Intervall zwischen 1 s und 5 s.

Das Verfahren kann, vorzugsweise zwischen den Schritten S4 und S5, einen Schritt zum Filtern der Kartenattribute oder von Werten der Kostenfunktion gemäß zulässigen Maximalwerten und/oder zulässigen Minimalwerten und/oder einen Schritt zum Begrenzen der Kartenattribute oder der Werte der Kostenfunktion auf einen zulässigen Maximalwert und/oder einen zulässigen Minimalwert aufweisen. Beispielsweise können zur Überprüfung der Emissionsrichtlinien nur maximale Steigungen oder maximale Dauer von Haltephasen zugelassen sein. Falls die kumulierte Höhe oder die Haltezeit die Grenzwerte überschreitet, werden die Kartenattribute bzw. der Input der Kostenfunktion begrenzt.

Die vorliegende Erfindung ist nicht nur für Navigation bzw.

Navigationsanwendungen geeignet, sondern hat auch Funktionen zur Verlängerung der Lebensdauer von Komponenten und kann eine Fallback-Strategie für nicht emissionsrelevante prädiktive Funktionen bieten.

## Patentansprüche

1. Verfahren zum prädiktiven Betreiben eines Kraftfahrzeugs auf der Grundlage einer prädiktiven Fahrfunktion, einer für die prädiktive Fahrfunktion charakteristischen Kostenfunktion und einer digitalen Karte, die Kartenattribute enthält, mit den folgenden Schritten:
Extrahieren (S1) von Kartenattributen innerhalb eines Prädiktionshorizontes um eine momentane Position des Kraftfahrzeugs;
Bestimmen (S2) der für die prädiktive Fahrfunktion charakteristischen Kostenfunktion;
Bestimmen (S3) von möglichen Routen innerhalb des Prädiktionshorizontes durch einen Navigationsalgorithmus, **gekennzeichnet durch**
Bestimmen (S4) eines Maximums oder eines Minimums der Kostenfunktion von den möglichen Routen, um eine ungünstigste Kostenfunktion zu erhalten; und
Berechnen (S5) der prädiktiven Fahrfunktion basierend auf der ungünstigsten Kostenfunktion oder basierend auf den Kartenattributen der ungünstigsten Kostenfunktion.

2. Verfahren gemäß dem vorherigen Anspruch, mit:
Filtern der Kartenattribute oder von Werten der Kostenfunktion gemäß zulässigen Maximalwerten und/oder zulässigen Minimalwerten; und/oder
Begrenzen der Kartenattribute oder der Werte der Kostenfunktion auf einen zulässigen Maximalwert und/oder einen zulässigen Minimalwert.

3. Verfahren gemäß einem der vorherigen Ansprüche, wobei
die Schritte iterativ durchgeführt werden, vorzugsweise in einem Intervall zwischen 1 s und 5 s.

4. Verfahren gemäß einem der vorherigen Ansprüche, wobei
der Prädiktionshorizont ein Umkreis mit einem Radius zwischen 2 und 10 km, vorzugsweise zwischen 5 und 8 km, um die momentane Position des Kraftfahrzeugs ist.

5. Verfahren gemäß einem der vorherigen Ansprüche, wobei
die prädiktive Fahrfunktion einen Parameter angibt, der Abgasemissionen oder einen Kraftstoffverbrauch des Kraftfahrzeugs beeinflusst.

6. Verfahren gemäß einem der vorherigen Ansprüche, wobei
die prädiktive Funktion einen Parameter zum Ansteuern einer Komponente eines Antriebsstrangs des Fahrzeugs angibt, insbesondere eine Beladung eines Katalysators für eine selektive katalytische Reduktion, eine Erwärmung eines Katalysators, ein Parameter für eine prädiktive Gangschaltstrategie, oder ein Parameter für eine prädiktive Strategie zum Thermomanagement von elektrischen Antrieben.

7. Verfahren gemäß einem der vorherigen Ansprüche, wobei
die charakteristische Kostenfunktion zumindest eine zu erwartende Last eines Motors des Kraftfahrzeugs, eine zu erwartende Beschleunigungsarbeit des Kraftfahrzeugs, eine zu erwartende Stillstandszeit des Kraftfahrzeugs, eine maximale zu erwartende Durchschnittsgeschwindigkeit des Kraftfahrzeugs, eine Anzahl von zu erwartenden Stopps des Kraftfahrzeugs, oder eine Anzahl von zu erwartenden Abbremsungen des Kraftfahrzeugs in Abhängigkeit von den Kartenattributen angibt.

## Claims

1. Method for predictively operating a motor vehicle on the basis of a predictive driving function, a cost function characteristic of the predictive driving function, and a digital map containing map attributes, having the following steps of:
extracting (S1) map attributes within a prediction horizon around an instantaneous position of the motor vehicle;
determining (S2) the cost function characteristic of the predictive driving function;
determining (S3) possible routes within the prediction horizon by means of a navigation algorithm,
**characterized by**
determining (S4) a maximum or a minimum of the cost function of the possible routes in order to obtain a most unfavourable cost function; and
calculating (S5) the predictive driving function on the basis of the most unfavourable cost function or on the basis of the map attributes of the most unfavourable cost function.

2. Method according to the preceding claim, comprising:
filtering the map attributes or values of the cost function according to permissible maximum values and/or permissible minimum values; and/or
limiting the map attributes or the values of the cost function to a permissible maximum value and/or a permissible minimum value.

3. Method according to one of the preceding claims, wherein
the steps are carried out iteratively, preferably in an interval of between 1 s and 5 s.

4. Method according to one of the preceding claims, wherein
the prediction horizon is an area with a radius of between 2 and 10 km, preferably between 5 and 8 km, around the instantaneous position of the motor vehicle.

5. Method according to one of the preceding claims, wherein
the predictive driving function indicates a parameter which influences exhaust gas emissions or a fuel consumption of the motor vehicle.

6. Method according to one of the preceding claims, wherein
the predictive function indicates a parameter for controlling a component of a drive train of the vehicle, in particular a load of a catalytic converter for selective catalytic reduction, heating of a catalytic converter, a parameter for a predictive gear shifting strategy, or a parameter for a predictive strategy for the thermal management of electrical drives.

7. Method according to one of the preceding claims, wherein
the characteristic cost function indicates at least an expected load of an engine of the motor vehicle, an expected acceleration work of the motor vehicle, an expected downtime of the motor vehicle, a maximum expected average speed of the motor vehicle, a number of expected stops of the motor vehicle, or a number of expected braking operations of the motor vehicle on the basis of the map attributes.

## Revendications

1. Procédé de fonctionnement prédictif d'un véhicule automobile sur la base d'une fonction de conduite prédictive, d'une fonction de coût caractéristique de la fonction de conduite prédictive et d'une carte numérique laquelle contient des attributs de carte, comprenant les étapes suivantes :
extraction (S1) d'attributs de carte à l'intérieur d'un horizon de prédiction autour d'une position momentanée du véhicule automobile ;
détermination (S2) de la fonction de coût qui est caractéristique de la fonction de conduite prédictive ;
détermination (S3) d'itinéraires possibles à l'intérieur de l'horizon de prédiction par un algorithme de navigation,
**caractérisé par**
détermination (S4) d'un maximum ou d'un minimum de la fonction de coût parmi les itinéraires possibles afin d'obtenir une fonction de coût la plus défavorable ; et
calcul (S5) de la fonction de conduite prédictive sur la base de la fonction de coût la plus défavorable ou sur la base des attributs de carte de la fonction de coût la plus défavorable.

2. Procédé selon la revendication précédente, comprenant :
filtrage des attributs de carte ou des valeurs de la fonction de coût en fonction de valeurs maximales autorisées et/ou de valeurs minimales autorisées ; et/ou limitation des attributs de carte ou des valeurs de la fonction de coût à une valeur maximale autorisée et/ou à une valeur minimale autorisée.

3. Procédé selon l'une quelconque des revendications précédentes,
les étapes étant exécutées de manière itérative, de préférence dans un intervalle compris entre 1 s et 5 s.

4. Procédé selon l'une quelconque des revendications précédentes,
l'horizon de prédiction étant un périmètre avec un rayon compris entre 2 et 10 km, de préférence entre 5 et 8 km, autour de la position momentanée du véhicule automobile.

5. Procédé selon l'une quelconque des revendications précédentes,
la fonction de conduite prédictive indiquant un paramètre qui influence les émissions de gaz d'échappement ou une consommation de carburant du véhicule automobile.

6. Procédé selon l'une quelconque des revendications précédentes,
la fonction prédictive indiquant un paramètre destiné à commander un composant d'un groupe motopropulseur du véhicule, notamment une charge d'un catalyseur pour une réduction catalytique sélective, un échauffement d'un catalyseur, un paramètre pour une stratégie prédictive de changement de rapport, ou un paramètre pour une stratégie prédictive de gestion thermique de mécanismes d'entraînement électriques.

7. Procédé selon l'une quelconque des revendications précédentes,
la fonction de coût caractéristique indiquant au moins une charge attendue d'un moteur du véhicule automobile, un travail d'accélération attendu du véhicule automobile, un temps d'immobilisation attendu du véhicule automobile, une vitesse moyenne maximale attendue du véhicule automobile, un nombre d'arrêts attendus du véhicule automobile, ou un nombre de freinages attendus du véhicule automobile en fonction des attributs de carte.
